# EUROPÄISCHE PATENTSCHRIFT

(11) **EP 0 676 037 B1**
(45) Veröffentlichungstag und Bekanntmachung des Hinweises auf die Patenterteilung: **20.05.1998**
(21) Anmeldenummer: 94929482.1
(22) Anmeldetag: 17.10.1994
(51) Int. Cl.: G01F 23/284

(54) **VORRICHTUNG ZUR FÜLLSTANDSMESSUNG IN BEHÄLTERN**
DEVICE FOR MEASURING THE LEVEL OF CONTAINER CONTENTS
DISPOSITIF PERMETTANT DE MESURER LE NIVEAU DE REMPLISSAGE DE CONTENANTS

(30) Priorität: 26.10.1993 DE 4336494
(43) Veröffentlichungstag der Anmeldung: 11.10.1995
(73) Patentinhaber: ENDRESS + HAUSER GMBH + CO., D-79689 Maulburg (DE)
(72) Erfinder: OTTO, Johanngeorg, D-73434 Aalen-Hofherrnweiler (DE)
(86) Internationale Anmeldenummer: DE9401229
(87) Internationale Veröffentlichungsnummer: WO9512113

(56) Entgegenhaltungen:
- WO-A-92/13257
- WO-A-92/14124
- WO-A-93/01474
- US-A- 4 670 754
- US-A- 5 115 218

## Beschreibung

Die Erfindung betrifft eine Vorrichtung zur Füllstandsmessung in Behältern mit einem Füllstandsmeßgerät, durch welche mittels einer Hornantenne kurzwellige elektromagnetische Wellen, Mikrowellen, durch eine Öffnung des Behälters auf die Oberfläche eines in dem Behälter befindlichen Füllgutes gesendet, an der Oberfläche reflektiert und über die gleiche Hornantenne von dem Füllstandsmeßgerät empfangen werden. Für jede Messung wird dann aus den empfangenen Echowellen eine die Echoamplituden als Funktion der Entfernung darstellende Echofunktion gebildet. Aus dieser Echofunktion wird die Laufzeit des Mikrowellenimpulses und daraus der Abstand zwischen der Hornantenne und der Oberfläche des Füllgutes ermittelt.

Zu der Mikrowellenfüllstandsmessung können verschiedene bekannte Verfahren angewendet werden, die es ermöglichen, kurze Entfernungen mittels reflektierter Wellen zu messen. Die dazu am häufigsten gebrauchten Verfahren sind das Impulsradar und das Frequenzmodulations-Dauerstrich-Radar (FMCW). Während bei dem erstgenannten Impulsradar periodisch kurze Mikrowellenimpulse ausgesendet werden, deren Laufzeit gemessen und daraus der Abstand ermittelt wird, wird bei dem FMCW-Radar eine kontinuierliche Mikrowelle ausgesendet, welche periodisch linear frequenzmoduliert ist. Die Frequenz jedes empfangenen Echosignales weist deshalb gegenüber der Frequenz des Sendesignales eine Frequenzdifferenz auf, die von der Laufzeit des Echosignales abhängt.

Für den Einsatz solcher Mikrowellenfüllstandsmeßgeräte in der Prozeßtechnik, zum Beispiel in der Chemieindustrie, besteht die Forderung, auch unter schwierigen Mess- und Umgebungsbedingungen exakt messen zu können. Diese schwierigen Bedingungen sind beispielsweise bestimmt durch hohe und/oder sich ständig ändernde Temperaturen, hohe und/oder sich ändernde Drücke und ähnlichen Bedingungen, insbesondere aber durch explosible oder aggressive oder toxische Füllgüter, das heißt Meßmedien.

Wie aus der DE-PS 41 00 922 hervorgeht, wird nach dem bisherigen Stand der Technik diesen Schwierigkeiten dadurch begegnet, indem das Füllstandsmeßgerät räumlich so getrennt ist, daß der die elektronischen Teile aufweisende Sende- und Empfangsteil außerhalb des gefährlichen Behälterinnenraumes und nur noch notwendigerweise die Antenne im Innenraum des Behälters angeordnet ist. Beide Teile sind durch einen die Behälterwand durchdringenden Hohlleiter verbunden. Zur Trennung des Sende- und Empfangsteiles von dem Behälterinnenraum ist in dem Hohlleiter ein Hohlleiterfenster aus einem Quarzglas angeordnet. Das Quarzglas ist dabei so gewählt, daß es einen für die Durchlässigkeit der Mikrowellen günstigen niedrigen dielektrischen Verlustfaktor besitzt.

Eine solche Trennung des Meßgerätes ist aber mit einem erhöhten konstruktiven Aufwand verbunden. Für die Anpassung ist es außerdem notwendig, Anpaßstücke aus einem Werkstoff mittlerer Dielektrizitätskonstante, z.B. Teflon, beidseitig des Glaskörpers anzuordnen, was wiederum zu einer Einschränkung des verfügbaren Einsatzbereiches, z.B. des Temperaturbereiches und der chemischen Resistenz führt. Dieser erhöhte Aufwand und die anwendungstechnischen Einschränkungen wären aber vermeidbar, wenn das komplette Füllstandsmeßgerät außerhalb des die explosiblen, aggressiven oder toxischen Meßmedien enthaltenden Behälterinnenraum angeordnet werden könnte. Dies ist jedoch nur dann möglich, wenn es sich um einen Behälter aus einem Kunststoff handelt, dessen Werkstoff, zum Beispiel GFK, PVC, PD mit εᵣ < 7, einen hohen Transmissionskoeffizienten gegenüber kurzwelligen elektromagnetischen Wellen aufweist.

Sehr häufig handelt es sich aber in der Prozeßtechnik um metallische Behälter, deren metallische Oberfläche elektromagnetische Wellen reflektieren, so daß eine Messung durch die geschlossene Behälterwand nicht möglich ist.

Die Erfindung geht nun von der Tatsache aus, daß solche Behälter sehr häufig über Öffnungen verfügen, durch welche in der Vergangenheit der Behälterinnenraum mittels Bedienpersonal optisch überwacht worden ist. Dabei sind diese Öffnungen konstruktiv so gestaltet und mit einer Glasplatte geeigneter Dicke so verschlossen, daß eine den Explosionsvorschriften gemäße Trennung zwischen Behälterinnenraum und umgebender Atmosphäre mit mehrfacher Sicherheit gegeben ist. Eine Lösung des Problems könnte nun darin bestehen, das Mikrowellenfüllstandsmeßgerät so über einem solchen Sichtfenster anzuordnen, daß die Sendewelle durch das Sichtfenster direkt auf die Füllgutoberfläche gerichtet ist.

Die Anordnung des kompletten Mikrowellenfüllstandsmeßgerätes außerhalb des Behälterinnenraumes über einem solchen Sichtglasfenster bringt aber meßtechnisch so große Nachteile mit sich, daß in der Vergangenheit auf eine solche naheliegende Anordnung des Füllstandsmeßgerätes verzichtet wurde.

Diese Nachteile liegen darin, daß der Feldwellenwiderstand so angepaßt sein muß, daß das Sichtglasfenster für die Mikrowellen in einem möglichst großen Band um die gewählte Mittenfrequenz herum durchlässig ist. Da diese Voraussetzungen bei den vorhandenen Sichtglasfenstern nicht oder nicht vollständig gegeben waren, führte dies in der Vergangenheit dazu, daß bedingt durch die beträchtlichen Dicken der Gläser und die damit verbundene sprunghafte Änderung des Wellenwiderstandes sowie das Nichtvorhandensein geeigneter Anpaßstrukturen und deren Dimensionierung die Durchlässigkeit derartiger Glasschichten für die Mikrowellen so gering war, daß kein auswertbares Nutzsignal vorhanden war.

Die Erfindung stellt sich nun die Aufgabe die Messung des Füllstandes in metallischen Behältern, bei welcher sich das komplette Mikrowellenfüllstandsmeßgerät außerhalb des Behälterinnenraumes befindet, zu ermöglichen, dabei das Mikrowellenfüllstandsmeßgerät oberhalb eines vorhandenen oder neu einzubringenden Sichtglasfensters anzuordnen, und die bisherigen meßtechnischen Nachteile einer solchen Anordnung zu vermeiden.

Die Erfindung bringt weiter den Vorteil, daß durch die Wahl der räumlichen Distanz zwischen der Unterkante der Hornantenne und der Glas- oder Keramikscheibe das Signal-Rauschverhältnis und die Signalstärke der elektromagnetischen Wellen einstellbar ist.

Gelöst wird diese Aufgabe durch die in dem Patentanspruch 1 gekennzeichneten Merkmale.

Weitere Merkmale und Vorteile der Erfindung sind in einem Ausführungsbeispiel der Erfindung beschrieben.

Es zeigen:
- Figur 1: Einen Schnitt durch die Anordnung eines Mikrowellenfüllstandsmeßgerätes oberhalb eines Sichtglasfensters eines Behälters.
- Figur 2: Die Diagramme a, b:
zeigend den Verlauf der Meßwerte des Mikrowellenfüllstandsmeßgerätes in Anwendung ohne und mit der Anordnung nach der Figur 1.
- Figur 3: Die Diagramme der Echofunktion der Mikrowellen bei einer Entfernung von 1,2 Meter wiederum in Anwendung ohne und mit der Anordnung nach der Figur 1.
- Figur 4: Die Diagramme der Echofunktion der Mikrowellen bei einer Meßentfernung von 2,2 Meter in Anwendung ohne und mit der Anordnung nach der Figur 1.

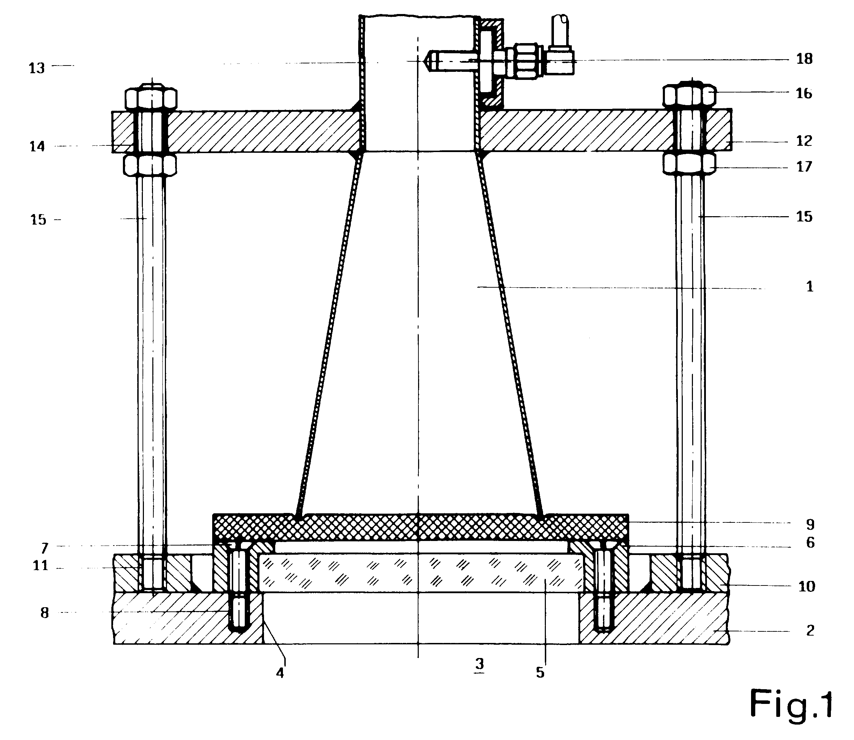

In Figur 1 ist mit 1 die Hornantenne eines kompakt aufgebauten Mikrowellenfüllstandsmeßgerätes dargestellt. Das Mikrowellenfüllstandsmeßgerät nimmt dabei eine Lage außerhalb eines metallischen Behälters, zum Beispiel oberhalb eines ebenfalls metallischen Behälterdeckels 2 ein. Im Innenraum 3 des Behälters befindet sich das explosible oder aggressive oder toxische Meßmedium, dessen Füllhöhe mit dem Mikrowellenfüllstandsmeßgerät gemessen werden soll. Da die metallische Behälterwand elektromagnetische Wellen reflektiert, ist die Messung direkt durch die Behälterwand nicht möglich. Deshalb ist das Füllstandsmeßgerät so über einer kreiszylindrischen Öffnung 4 angeordnet, daß die elektromagnetischen Wellen über die Hornantenne 1 direkt auf die Oberfläche des Meßmediums gerichtet sind. Die Öffnung 4 durchdringt den Behälterdeckel 2 vollkommen. Bei der kreiszylindrischen Öffnung 4 kann es sich um ein zur Überwachung des Behälterinnenraumes bereits vorhandenes Sichtfenster, aber auch um eine extra zu diesem Zweck neu eingebrachte Öffnung handeln. Zur Trennung des Behälterinnenraumes gegenüber der Umwelt ist die Öffnung 4 mit einer Scheibe 5 aus einem Quarzglas oder einem keramischen Werkstoff verschlossen. Der Werkstoff des Quarzglases oder der Keramik ist so gewählt, daß er eine für die Durchlässigkeit der Mikrowellen günstige niedrige Dielektrizitätskonstante sowie einen möglichst niedrigen Verlustfaktor besitzt. Auch ist es notwendig, die Wandstärke des Quarzglases oder der Keramik so zu wählen, daß eine sichere Trennung von Prozess und Umwelt gewährleistet ist. Der Durchmesser des Fensters hat dabei mindestens der Antennenöffnungsfläche der Hornantenne 1 zu entsprechen. Bei dem beschriebenen Ausführungsbeispiel haben sich solche Fenster aus einem 25 mm dicken Borosilikatglas und Öffnungen mit einem Öffnungsdurchmesser von 150 mm bewährt.

Zur Befestigung der Quarzglas- oder Keramikscheibe 5 an dem Behälterdeckel 2 umgreift ein Umfassungsring 6 die Quarzglas- oder Keramikscheibe 5.

Die Befestigungsschrauben 7 bilden zusammen mit Gewindebohrungen 8 eine lösbare Verbindung mittels welcher der Fassungsring 6 mit der Behälterwand 2 formschlüssig verbunden ist. Natürlich kann die Quarzglas- oder Keramikscheibe 5 oder der Fassungsring 6 durch jede andere, dem Fachmann bekannte Befestigungsart mit dem Behälterdeckel 2 verbunden sein.

Die Mikrowellenfüllstandsmessung durch ein solches Glasfenster scheiterte bisher daran, daß trotz der vergleichsweise geringen Dielektrizitätskonstanten der verwendeten Gläser wegen der für die Trennung von Prozess und Umwelt notwendigen Dicke des Glases oder der Keramik innerhalb der benötigten Durchlassbandbreite der kurzwelligen elektromagnetischen Wellen kräftige Reflektionen an der Ober- und Unterfläche der Glas- oder Keramikscheibe und nur schmalbandige Dickenresonanzen auftreten. So wird beispielsweise bei einem Glas mit εᵣ = 7 an jeder Grenzfläche von Glas/ Luft nur etwa 80 % der Wellen durchgelassen und etwa 20 % reflektiert.

Der an den Oberflächen der Glas- oder Keramikscheibe reflektierte Wellenanteil erreicht natürlich wegen der kurzen Distanz zu dem Füllstandsmeßgerät unmittelbar nach dem Aussenden über die Hornantenne wieder das Füllstandsmeßgerät. Er wird hier von der Hornantenne und/oder dem Hohlleiterrohr und danach wiederum von den Oberflächen der Glas- oder Keramikplatte reflektiert. Diese bis zum völligen Energieverlust eine Zeitspanne ständig zwischen Füllstandsmeßgerät und Oberflächen der Glasscheiben hin und her laufenden Wellenanteile verursachen ein Störecho näherungsweise in Form einer Rampe, welche das Nutzsignal überdeckt und somit die Messung im Nahbereich der Antenne unmöglich macht.

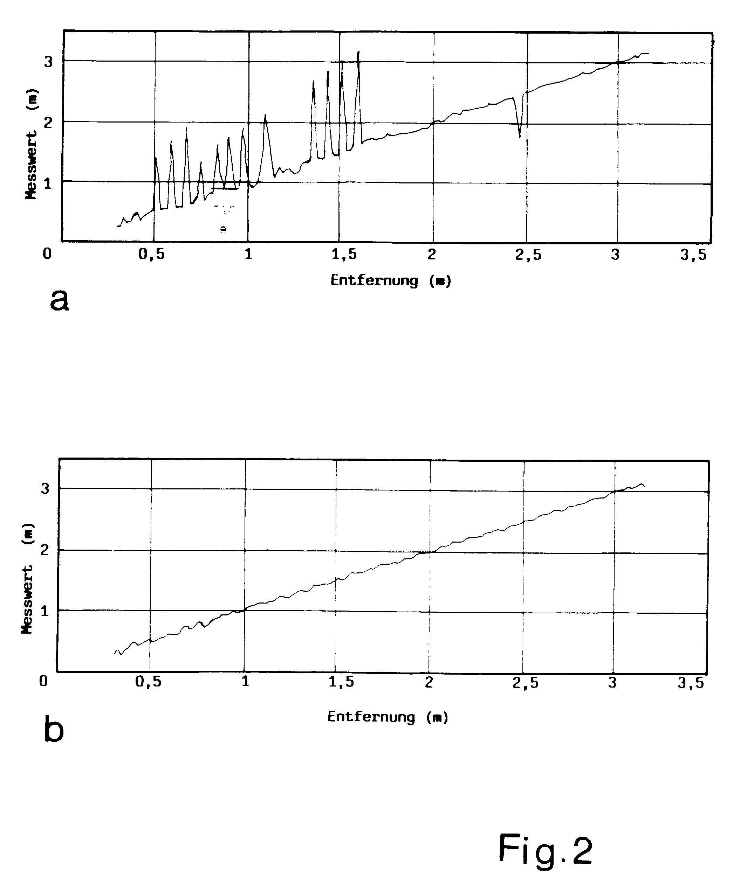

In Figur 2 sind die Auswirkungen dieses Effektes dargestellt. In dem Diagramm von Figur 2a ist als Abszissenachse die Meßentfernung in Metern und als Ordinatenachse der Meßwert ebenfalls in Metern aufgetragen. Die Kurve stellt das bei der Messung durch die Quarzglas- oder Keramikscheibe auf die Oberfläche eines in einem Behälter befindliche Füllgut erhaltene Meßsignal des Mikrowellenfüllstandsmessgerätes dar. Wie aus der Kurve 2a ersichtlich ist, treten gehäuft Fehlmessungen auf. Die von Mehrfachreflektionen stammenden Störechos im Nahbereich der Antenne von ca. 0,5 Meter bis ca. 3,5 Meter bilden einen so hohen Störpegel, daß eine sichere Messung des Füllstandes in diesem Bereich nicht möglich ist.

In Überwindung dieses Vorurteiles hat sich nun aber überraschenderweise gezeigt, daß die Messung des Füllstandes mittels kurzer elektromagnetischer Wellen durch das von einer mit einer Quarzglas- oder Keramikscheibe verschlossenen Fenster eines metallischen Behälters dennoch möglich ist, wenn erfindungsgemäß zwischen dem Mikrowellenkopplungselement 18 und der Quarzglas- oder Keramikscheibe 5 eine Schicht 9 aus einer herkömmlichen, handelsüblichen Dämpfungsmatte zwischengefügt ist. Das Zwischenfügen einer solchen Dämpfungsschicht 9 bewirkt, daß sowohl das Meßsignal als auch das reflektierte Signal beim Durchgang durch die Dämpfungsschicht eine Schwächung erfährt. Diese zweimalige Dämpfung schwächt zwar das Nutzsignal, aber auch das, durch Rückreflektionen an den Oberflächen der Hornantenne 1 und der Glas- oder Keramikscheibe 5 entstehende, hin urd her laufende Störsignal. Dieses letztere wird durch die mehrfachen Durchgänge der Bedämpfungsschicht in erheblichem Maße mehr bedämpft als dies bei dem zweimaligen Durchgang des Nutzsignales der Fall ist. Damit ergibt sich eine sichtbare Steigerung des Signal-Rauschverhältnisses. Durch Wahl des Dämpfungskoeffizienten der Dämpfungsschicht kann das Signal-Rauschverhältnis und damit verbunden der Pegel des Nutzsignales eingestellt werden.Die Dämpfungsmatte kann dabei zum Beispiel aus einer handelsüblichen Dämpfungsmatte aus einem ECCOSORB AN der Firma GRACE N.V., Belgien, bestehen.

In Figur 2b ist wiederum die Meßentfernung in Metern als Abszissenachse und der Meßwert in Metern als Ordinatenachse aufgetragen. Die Kurve zeigt das Meßsignal analog zur Figur 2a mit dem Unterschied, daß zur Messung eine Bedämpfungsschicht 9 zwischen die Hornantenne 1 und die Glas- oder Keramikscheibe 5 zwischengefügt ist. Es ist aus Figur 2b klar ersichtlich, daß die Einbringung der Bedämpfungsschicht 9 einen hohen Störpegel verhindert und durchweg zu korrekten Meßwerten führt. Natürlich ist es erforderlich, daß das Mikrowellenfüllstandsmeßgerät über eine ausreichende Dynamikreserve verfügt, damit das zweimal bedämpfte Nutzsignal trotz der Bedämpfung einwandfrei ausgewertet werden kann. Dies stellt jedoch kein Problem dar, da fast alle heute üblichen Mikrowellenfüllstandsmeßgeräte über eine solche hinreichende Dynamikreserve verfügen.

Das Zwischenfügen einer Bedämpfungsschicht bringt zudem den Vorteil, daß über die Wahl des Bedämpfungsfaktors die Steilheit des Störsignales, also das Signal-Rauschverhältnis als Funktion der Entfernung und damit die absolute Höhe des Nutzsignales und damit verbunden auch der Meßbereich eingestellt werden kann.

Die Vorrichtung von Figur 1 zeigt weiter eine Befestigung für das Füllstandsmeßgerät an dem Deckel 2 des Behälters. Dazu umläuft ein Ringflansch 10 koaxial mit gleichbleibenden Abstand den Fassungsring 6. Der Ringflansch 10 weist eine Reihe von Gewindebohrungen 11 auf. Diese sind entlang eines Lochkreises mit gleichem Abstand in den Ringflansch 10 eingebracht. Der Ringflansch 10 ist mittels einer Schweißverbindung nichtlösbar mit dem Behälterdeckel 2 verbunden.

Eine weitere Schweißverbindung stellt die nicht lösbare Verbindung der Hornantenne 1 mit einem Befestigungsflansch 12 her. Der Befestigungsflansch 12 umläuft formschlüssig koaxial die Oberkante der Hornantenne 1 sowie die Mantelfläche des Hohlleiterrohres 13. Der Erregerstift des Mikrowellenkopplungselementes 18 durchdringt die Mantelfläche des Hohlleiterrohres 13 und ragt ein Stück radial in den Innenraum des Hohlleiterrohres 13. Das Mikrowellenkopplungselement 18 ist über eine Koaxialleitung mit dem elektronischen Sende- und Empfangsteil verbunden. Entlang seinem Umfang weist der Befestigungsflansch 12 eine Reihe von Durchgangsbohrungen 14 auf, welche gleich den Gewindebohrungen 11 des Ringflansches 10 auf dem Befestigungsflansch 12 verteilt sind. Die Gewindebohrungen 11 und die Durch> gangsbohrungen 14 liegen sich gegenüber. Zwischen den Flanschen 10 und 12 sind Gewindesäulen 15 angeordnet. Die Gewindesäulen 15 stützen sich in den Gewindebohrungen 11 des Ringflansches 10 ab. Der Befestigungsflansch 12 ist weiter zwischen jeweils zwei Muttern 16, 17 der Gewindesäulen 15 eingespannt. Damit ist das Füllstandsmeßgerät lösbar mit dem Behälterdeckel 2 verbunden. Diese Art der Befestigung erlaubt es, den Abstand des Füllstandsmeßgerätes zu dem Behälterdeckel 2 und damit den Abstand der Kante der Hornantenne 1 zu der Glas- oder Keramikscheibe 5 durch einfaches Lösen, Verstellen und wieder Anziehen der durch den Befestigungsflansch 12 und die Muttern 16, 17 gebildeten Schraubverbindung präzise einzustellen. Eine solche Einstellung ist deshalb notwendig, weil über den Abstand zwischen der Hornantenne 1 und der Glas- oder Keramikscheibe 5 das Signal-Rauschverhältnis in einem räumlichen Bereich in der Nähe des Fensters besonders groß gehalten werden kann.

Natürlich kann auch jede andere, dem Fachmann geläufige, höhenverstellbare Befestigung des Mikrowellenfüllstandsmeßgerätes gewählt werden.

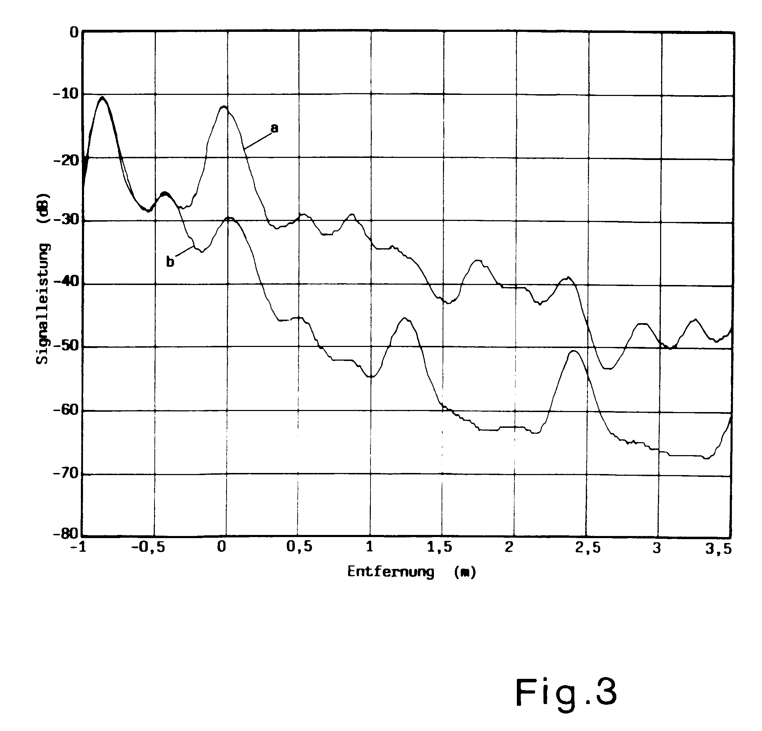

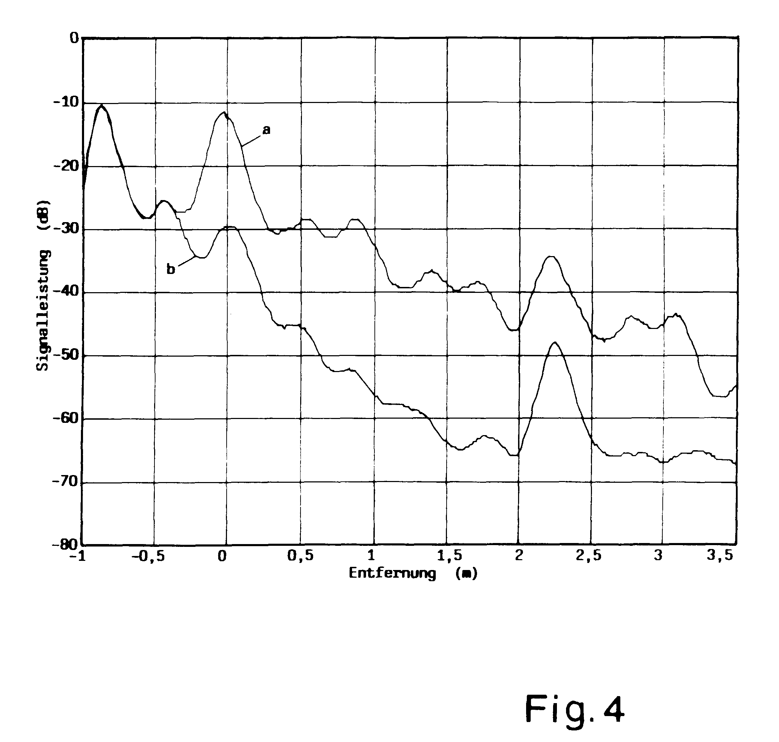

Die Figuren 3 und 4 zeigen die Wirkung der Erfindung anhand der Diagramme der Echofunktion. In den Diagramm von Figur 3 ist als Abszissenachse wiederum die Entfernung in Metern und als Ordinatenachse die Signalleistung in dB aufgetragen. Die obere Kurve a zeigt die Echofunktion ohne Bedämpfungsschicht 9 und die Kurve b die Echofunktion mit Bedämpfungsschicht 9 bei einer Meßentfernung von 1,2 m.

Das erste große Maximum stellt jeweils den Sendeimpuls dar. Das Maximum bei 0 m ist die Reflektion an der Oberfläche der Glas- oder Keramikscheibe 5. Wie aus der Kurve a ersichtlich ist, ist die Reflektion an der Oberfläche der Scheibe 5 ohne Bedämpfungsschicht 9 um ca. 20 dB stärker ausgeprägt als in der Kurve b unter Zwischenfügung der Bedämpfungsschicht 9. In dem Diagramm von Figur 3 verschwindet ohne die Bedämpfungsschicht 9 das Nutzsignal völlig in dem Störsignal, während es sich mit Bedämpfungsschicht 9 deutlich davon abhebt.

Das Diagramm von Figur 4 zeigt die gleiche Echofunktion bei einer Meßentfernung von 2,2 m Entfernung. In dem Diagramm von Figur 4 ist zu sehen, daß ohne Bedämpfungsschicht 9 das Nutzsignal zwar noch auswertbar ist, aber ein geringeres Signal-Rauschverhältnis aufweist, wie das unter Zwischenfügung der Bedämpfungsschicht 9 der Fall ist. Das Störsignal wird durch die Bedämpfung wesentlich glatter.

Trotz der durch die Bedämpfung verursachten Absenkung der Signalleistung ist die Echofunktion in allen Fällen besser auswertbar. In der Praxis hat sich bei einer Sendefrequenz von 5,8 GHz und einer Dicke der Bedämpfungsschicht von ca. 20 mm eine Dämpfungswirkung vom 7 dB ergeben. Ein Abstand zwischen der Hornantenne 1 und der Glas- oder Keramikscheibe 5 von ca. 40 mm hat sich besonders bewährt.

Vorteilhaft ist natürlich, wenn zwischen der Kante der Hornantenne 1 und der Scheibe 5 möglichst wenig reflektierende Teile wie Abstandshalter, Stegbolzen, metallische Gehäuseteile, usw. vorhanden sind, damit weitere Reflektionen der Sendewelle vermieden werden.

Es soll nicht verschwiegen werden, daß die Messung des Füllstandes mittels kurzer elektromagnetischer Wellen durch eine Glas- oder Keramikscheibe eines metallischen Behälters unter Zwischenfügung einer Bedämpfungsschicht gegenüber einer Messung durch die Wandung eines Behälters aus einem dafür geeigneten Werkstoff, zu einer Verringerung der Reichweite der Messung führt. In den meisten Anwendungsfällen aber kann dies ohne weiteres in Kauf genommen werden.

## Patentansprüche

1. Vorrichtung zur Füllstandsmessung in Behältern mit einem Füllstandsmeßgerät, durch welches mittels einer Hornantenne kurzwellige elektromagnetische Wellen durch eine Öffnung des Behälters auf die Oberfläche eines in dem Behälter befindlichen Füllguts gesendet, an der Oberfläche reflektiert und über die gleiche Hornantenne von dem Füllstandsmeßgerät empfangen werden, gekennzeichnet durch die folgenden Merkmale:
a) Das Füllstandsmeßgerät ist einschließlich der Hornantenne (1) entlang einer Symmetrieachse der Öffnung (4) oder einer um wenige Grade von der Symmetrieachse abweichenden Achse außerhalb des Behälterinnenraumes (3) an der Behälterwand (2) angeordnet;
b) Die Öffnung (4) ist von einer Glas- oder Keramikscheibe (5) verschlossen;
c) Zwischen einem Mikrowellenkopplungselement (18) des Füllstandsmeßgerätes und der Oberfläche der Glas- oder Keramikscheibe (5) ist eine Bedämpfungsschicht (9) zwischengefügt;
d) Die Bedämpfungsschicht (9) nimmt zwischen dem Mikrowellenkopplungselement (18) und der Glas- oder Keramikscheibe (5) eine solche Lage ein, daß jede abgestrahlte oder reflektierte, die Bedämpfungsschicht durchdringende elektromagnetische Welle eine Bedämpfung erfährt.

2. Füllstandsmeßgerät nach Anspruch 1 **dadurch gekennzeichnet**, daß die Bedämpfungsschicht (9) durch einen Abschnitt einer handelsüblichen Bedämpfungsmatte gebildet ist.

3. Vorrichtung nach Anspruch 2 **dadurch gekennzeichnet**, daß die Bedämpfungsschicht (9) aus einem ECCOSORB AN der Firma GRACE N.V., Belgien besteht.

4. Vorrichtung nach Anspruch 1 **dadurch gekennzeichnet**, daß der, das Meßmedium enthaltene, Behälterinnenraum (3) durch die Glas- oder Keramikscheibe (5) gegenüber der Umwelt abgeschlossen ist.

5. Vorrichtung nach Anspruch 4 **dadurch gekennzeichnet**, daß die Glas- oder Keramikscheibe (5) von Befestigungsmitteln (6) umgriffen ist.

6. Vorrichtung nach Anspruch 5 **dadurch gekennzeichnet**, daß die Glas- oder Keramikscheibe (5) über die Befestigungsmittel (6) druckdicht und explosionsschützend mit der Behälterwand (2) verbunden ist.

7. Vorrichtung nach Anspruch 4 **dadurch gekennzeichnet**, daß die Glas- oder Keramikscheibe (5) aus einem Werkstoff mit für die Durchlässigkeit von elektromagnetischen Wellen niedrigen dielektrischen Verlustfaktor und niedriger Dielektrizitätskonstante gebildet ist.

8. Vorrichtung nach Anspruch 7 **dadurch gekennzeichnet**, daß die Glas- oder Keramikscheibe (5) aus einem Borosilikatglas gebildet ist.

9. Vorrichtung nach Anspruch 1 **dadurch gekennzeichnet**, daß durch Wahl der räumlichen Distanz zwischen der Unterkante der Hornantenne (1) und der Oberfläche der Glas- oder Keramikscheibe (5) das Signal-Rauschverhältnis und die Signalstärke der elektromagnetischen Wellen einstellbar ist.

10. Vorrichtung nach Anspruch 9 **dadurch gekennzeichnet**, daß Mittel (15, 16, 17) zur Veränderung und Festlegung der räumlichen Distanz zwischen der Unterkante der Hornantenne (1) und der Oberfläche der Glas- oder Keramikscheibe (5) vorhanden sind.

11. Vorrichtung nach Anspruch 1 **dadurch gekennzeichnet**, daß durch Wahl des Dämpfungskoeffizienten das Signal-Rauschverhältnis und die Absoluthöhe des Nutzsignales einstellbar ist.

## Claims

1. A tank-contents level measuring assembly comprising a level measuring device wherein short electromagnetic waves are transmitted through an opening in the tank toward the surface of contents of the tank by means of a horn antenna, reflected at the surface, and received via the same horn antenna, characterized by the following features:
a) The level measuring device, including the horn antenna (1), is disposed outside the interior (3) of the tank at the tank wall (2) along an axis of symmetry of the opening (4) or along an axis deviating from the axis of symmetry by a few degrees;
b) the opening (4) is closed by a sheet of glass or ceramic (5);
c) a damping layer (9) is interposed between a microwave coupling element (18) of the level measuring device and the surface of the sheet of glass or ceramic (5); and
d) the damping layer (9) is positioned between the microwave coupling element (18) and the sheet of glass or ceramic (5) in such a manner than each radiated or reflected electromagnetic wave passing through the damping layer is damped.

2. A level measuring device as claimed in claim 1, characterized in that the damping layer (9) is formed by a piece of a commercially available damping mat.

3. An assembly as claimed in claim 2, characterized in that the damping layer (9) is made of ECCOSORB AN as is available from GRACE N.V., Belgium.

4. An assembly as claimed in claim 1, characterized in that the interior (3) of the tank containing the medium whose level is to be measured is sealed from the environment by the sheet of glass or ceramic (5).

5. An assembly as claimed in claim 4, characterized in that the sheet of glass or ceramic (5) is embraced by fixing means (6).

6. An assembly as claimed in claim 5, characterized in that the fixing means (6) provide a pressure- and explosion-proof joint between the sheet of glass or ceramic (5) and the tank wall (2).

7. An assembly as claimed in claim 4, characterized in that the sheet of glass or ceramic (5) is made of a material having a low dielectric loss factor for the transmission of electromagnetic waves and a low dielectric constant.

8. An assembly as claimed in claim 7, characterized in that the sheet of glass or ceramic (5) is made of borosilicate glass.

9. An assembly as claimed in claim 1, characterized in that the signal-to-noise ratio and the signal strength of the electromagnetic waves are settable by an appropriate choice of the spatial distance between the bottom edge of the horn antenna (1) and the surface of the sheet of glass or ceramic (5).

10. An assembly as claimed in claim 9, characterized in that means (15, 16, 17) are provided for changing and fixing the spatial distance between the bottom edge of the horn antenna (1) and the surface of the sheet of glass or ceramic (5).

11. An assembly as claimed in claim 1, characterized in that the signal-to-noise ratio and the absolute level of the useful signal are settable by an appropriate choice of the damping coefficient.

## Revendications

1. Dispositif pour mesurer le niveau de remplissage à l'intérieur de récipients, comportant un instrument de mesure du niveau de remplissage par lequel des ondes courtes électromagnétiques sont émises au moyen d'une antenne en cornet à travers une ouverture du récipient, vers la surface d'un produit se trouvant à l'intérieur de celui-ci, réfléchies sur cette surface et reçues au moyen de la même antenne en cornet par l'appareil de mesure du niveau, caractérisé en ce qu'il présente les particularités suivantes :
a) l'instrument de mesure du niveau, y compris l'antenne en cornet (1), est disposé sur la paroi (2) du récipient, le long d'un axe de symétrie de l'ouverture (4) ou le long d'un axe s'écartant de quelques degrés seulement de cet axe de symétrie, à l'extérieur de l'espace interne (3) dudit récipient ;
b) l'ouverture (4) est obturée par un disque (5) en verre ou en céramique ;
c) entre un élément de couplage (18) à micro-ondes de l'instrument de mesure de niveau et la surface du disque (5) en verre ou en céramique est intercalée une couche d'amortissement (9) ;
d) la couche d'amortissement (9) occupe, entre l'élément de couplage à micro-ondes (18) et le disque (5), une position telle que chaque onde électromagnétique émise ou réfléchie, qui traverse la couche d'amortissement, est soumise à un amortissement.

2. Instrument de mesure de niveau selon la revendication 1, caractérisé en ce que la couche d'amortissement (9) est constituée d'une section découpée dans une nappe d'un produit amortisseur en usage dans le commerce.

3. Dispositif selon la revendication 2, caractérisé en ce que la couche d'amortissement (9) est constituée en un produit ECCOSORB AN de la société GRACE N. V. Belgique.

4. Dispositif selon la revendication 1, caractérisé en ce que l'espace interne (3) du récipient contenant le fluide à mesurer est fermé par rapport à l'environnement extérieur par le disque (5) en verre ou en céramique.

5. Dispositif selon la revendication 4, caractérisé en ce que le disque (5) en verre ou en céramique est encerclé par des moyens de fixation (6).

6. Dispositif selon la revendication 5, caractérisé en ce que la liaison entre le disque (5) en verre ou en céramique et la paroi (2) du récipient, réalisée par les moyens de fixation (6), est étanche à la pression et est une protection anti-déflagrante.

7. Dispositif selon la revendication 4, caractérisé en ce que le disque (5) en verre ou en céramique est constitué en une matière à bas facteur de perte diélectrique et à basse constante diélectrique, pour assurer la perméabilité aux ondes électromagnétiques.

8. Dispositif selon la revendication 7, caractérisé en ce que le disque (5) en verre ou en céramique est constitué en un verre de borosilicate.

9. Dispositif selon la revendication 1, caractérisé en ce que le rapport signal-bruit et l'intensité du signal des ondes électromagnétiques sont réglables par la sélection de la distance de l'espace entre le bord inférieur de l'antenne en cornet (1) et la surface du disque (5) en verre ou en céramique.

10. Dispositif selon la revendication 9, caractérisé par la présence de moyens (15, 16, 17), pour la variation et la détermination de la distance de l'espace entre le bord inférieur de l'antenne en cornet (1) et la surface du disque (5) en verre ou en céramique.

11. Dispositif selon la revendication 1, caractérisé en ce que le rapport signal-bruit et l'amplitude du signal utile sont réglables par la sélection du coefficient d'amortissement.
